# EUROPÄISCHE PATENTSCHRIFT

(11) **EP 4 164 880 B1**
(45) Veröffentlichungstag und Bekanntmachung des Hinweises auf die Patenterteilung: **20.03.2024**
(21) Anmeldenummer: 21729533.6
(22) Anmeldetag: 31.05.2021
(51) Int. Cl.: B32B 17/10

(54) **VERFAHREN ZUM LAMINIEREN EINER VERBUNDSCHEIBE UMFASSEND EIN FUNKTIONSELEMENT MIT ELEKTRISCH SCHALTBAREN OPTISCHEN EIGENSCHAFTEN**
METHOD FOR LAMINATING A COMPOSITE PANE COMPRISING A FUNCTIONAL ELEMENT WITH ELECTRICALLY CONTROLLED OPTICAL PROPERTIES
PROCÉDÉ DE LAMINAGE D'UNE VITRE COMPOSITE COMPRENANT UN ÉLÉMENT FONCTIONNEL À DES PROPRIÉTÉS OPTIQUES ÉLECTRIQUEMENT COMMUTABLES

(30) Priorität: 10.06.2020 EP 20179209
(43) Veröffentlichungstag der Anmeldung: 19.04.2023
(73) Patentinhaber: Saint-Gobain Glass France, 92400 Courbevoie (FR)
(72) Erfinder: LABROT, Michael, 52072 Aachen (DE); MAILLAUD, Laurent, 91300 Massy (FR)
(74) Vertreter: SGR Germany-Patents
(86) Internationale Anmeldenummer: PCT/EP2021/064493
(87) Internationale Veröffentlichungsnummer: WO 2021/249801

(56) Entgegenhaltungen:
- EP-A1- 0 825 478
- EP-A2- 0 964 288

## Beschreibung

Die Erfindung betrifft ein Verfahren zur Herstellung einer Verbundscheibe umfassend ein Funktionselement mit elektrisch schaltbaren optischen Eigenschaften, eine Verbundscheibe erhältlich nach einem solchen Verfahren und deren Verwendung.

Verglasungen mit elektrisch schaltbaren optischen Eigenschaften sind bekannt. Solche Verglasungen enthalten ein Funktionselement, welches typischerweise eine aktive Schicht zwischen zwei Flächenelektroden enthält. Die optischen Eigenschaften der aktiven Schicht können durch eine an die Flächenelektroden angelegte Spannung verändert werden. Zu den insbesondere im Automobilbereich verwendeten elektrisch schaltbaren Funktionselementen zählen flüssigkristallbasierte Funktionselemente, auch als Flüssigkristallelemente bekannt. Zu den Flüssigkristallelementen zählen beispielsweise PDLC-Elemente (*polymer dispersed liquid crystal*)*,* deren aktive Schicht in einer Polymermatrix eingelagerte Flüssigkristalle umfasst. PDLC-Funktionselemente sind beispielsweise aus DE 102008026339 A1 bekannt. Eine andere Gruppe der Flüssigkristallelemente sind als sogenannte *Guest-Host-Zelle* aufgebaute Flüssigkristallzellen, die einen dichroitischen Farbstoff enthalten. Die Flüssigkristalle sind dabei das Medium (*host*), in dem der Farbstoff eingelagert ist (*guest*), wobei der Farbstoff sich bezüglich seiner räumlichen Orientierung der Vorzugsrichtung der Flüssigkristalle anpasst. Die Flüssigkristallmischung mit dichroitischem Farbstoff ist zwischen zwei Trägerfolien eingebracht, die jeweils eine leitfähige Schicht als Flächenelektrode und eine Ausrichtungsschicht umfassen. Die Ausrichtungsschicht gibt dabei die Vorzugsrichtung der Flüssigkristalle im stromlosen Zustand vor. Bei Anlegen einer elektrischen Spannung an den Flächenelektroden ändern die Flüssigkristalle ihre Ausrichtung, wobei der zwischen den Flüssigkristallmolekülen eingelagerte Farbstoff die gleiche Änderung in seiner Orientierung vornimmt. Die optischen Eigenschaften der Flüssigkristallzelle mit eingelagertem Farbstoff sind somit in Abhängigkeit des angelegten elektrischen Feldes veränderlich, so dass die Zelle zwischen einem transparenten Zustand niedriger Trübung und niedriger Tönung sowie einem opaken Zustand niedriger Trübung und hoher Tönung schaltbar ist. Derartige Guest-Host-Zellen umfassend eine Flüssigkristallmischung mit dichroitischem Farbstoff sind beispielsweise aus WO 2014/126974 A1 bekannt. Verglasungen mit solchen Funktionselementen können also auf komfortable Weise elektrisch abgedunkelt werden.

Zur ausfallsicheren Verwendung von Guest-Host-Flüssigkristallzellen ist eine zuverlässige Randversiegelung der Zelle erforderlich. Diese verhindert, dass das Flüssigkristallmaterial seitlich aus der Zelle entweichen kann. Die Dicke der Zelle wird über kugelförmige Abstandhalter, die über die gesamte Fläche der Zelle verteilt sind, definiert. Eine typische Zellendicke beträgt beispielsweise 10 µm. Auch wenn in der Zelle selbst eine zuverlässige Randversiegelung erfolgt ist und eine gleichmäßige Zellendicke eingestellt wurde, so unterliegt die Flüssigkristallzelle zumindest im Verarbeitungsprozess externen Kräften. Ein lokaler Druck auf einen kleinen Zellenbereich führt beispielsweise dazu, dass das Flüssigkristallmaterial von dieser Stelle wegfließt. Aufgrund der an dieser Stelle auftretenden geringeren Zellendicke tritt eine lokale Reorientierung der Flüssigkristalle ein, wobei zunächst im Bereich geringerer Zellendicke ein Farbwechsel stattfindet, der zu einem inhomogenen Erscheinungsbild führt. Sofern die lokal auf die Flüssigkristallzelle wirkende Kraft vergleichsweise gering ist findet eine Neuausrichtung der Flüssigkristalle statt und das Flüssigkristallelement erlangt nach kurzer Zeit sein homogenes Erscheinungsbild zurück.

Die beschriebenen Flüssigkristallelemente umfassend eine Guest-Host-Flüssigkristallzelle zwischen zwei Trägerfolien sind kommerziell erhältlich und ermöglichen die Herstellung einer elektrisch schaltbaren Verglasung. Typischerweise wird das Flüssigkristallelement zwischen zwei Glasscheiben mit herkömmlichen Methoden einlaminiert, wobei eine Verbundscheibe mit elektrisch schaltbaren optischen Eigenschaften erzeugt wird. Eine Deformation der Guest-Host-Flüssigkristallzelle tritt auch im Laminationsprozess auf, wobei die im Autoklavverfahren auftretende hydrostatische Druckänderung eine globale Wirkung auf die Zelle hat und somit als unkritisch bezüglich lokaler Deformationen und damit einhergehender optischer Inhomogenitäten einzustufen ist. Über die aus der Anwendung des Autoklavverfahrens selbst resultierenden Druckänderungen hinausgehend, sind auch die von den anderen Lagen des Schichtstapels auf das Flüssigkristallelement wirkenden Drücke zu beachten. Insbesondere bei gebogenen Verglasungen kann es zu unterschiedlichen Biegungen der äußeren und inneren Scheibe kommen, die auch durch gemeinsames kongruentes Biegen der Scheiben nicht vollständig vermeidbar sind. Hinzu kommen Dickenschwankungen der üblicherweise verwendeten thermoplastischen Verbundfolien. Lokale Dickenerhöhungen der Scheiben und der Verbundfolien werden im Laminierprozess auf die Flüssigkristallzelle übertragen, wodurch ein lokaler Druck entsteht, der mit der beschriebenen optischen Inhomogenität einhergeht. Die lokalen Druckstellen führen einer Verformung der Flüssigkristallzelle.

Die beschriebenen Probleme, die resultieren sobald an der Grenzfläche von Funktionselement und thermoplastischer Zwischenschicht keine deckungsgleichen Oberflächen bereitgestellt werden, bestehen nicht nur bei Guest-Host-Flüssigkristallzellen, sondern können auch bei anderen Funktionselementen mit elektrisch schaltbaren optischen Eigenschaften auftreten. Das Maß der auftretenden Qualitätsminderung ist dabei unter anderem abhängig von der Bauart des Funktionselementes.

In EP 0825478 A1 wird eine Verbundscheibe beschrieben, die ein Funktionselement mit elektrisch steuerbaren optischen Eigenschaften umfasst, wobei das Funktionselement Flüssigkristall-Domänen mit dichroitischem Farbstoff enthält.

EP 0964288 A2 offenbart eine Verglasung umfassend ein Funktionselement mit elektrisch steuerbaren optischen Eigenschaften, das Flüssigkristalle und dichroitische Farbstoffe umfasst, wobei der Abbau der dichroitischen Farbstoffe durch Photoreduktion vermindert werden soll.

Ein möglicher Ansatz um die optische Qualität von Verbundscheiben mit Funktionselementen zu verbessern ist die Verwendung von Harzen, die zur Lamination des Funktionselementes eingesetzt werden können. So sind beispielsweise UV-härtende Acrylharze unter dem Begriff OCA (*optically clear adhesive*) bekannt. Diese werden in Folienform zwischen zwei Transferfolien bereitgestellt, wobei die Transferfolien lediglich dem Auftrag des OCA auf eine Scheibe oder anderweitiges Substrat dienen. Diese harzförmigen Folien können zwar eine gewisse optische Verbesserung bewirken, jedoch ist nicht unter allen Umständen eine vollständige Lösung der beschriebenen Problematik möglich. Darüber hinaus ist es wünschenswert nicht nur unter Verwendung harzartiger Folien eine optische Verbesserung zu erreichen, sondern diese und auch andere der gängigen Verbundfolien einsetzen zu können.

Aufgabe der vorliegenden Erfindung ist es, ein Verfahren zur Herstellung einer Verbundscheibe umfassend ein Funktionselement mit elektrisch schaltbaren optischen Eigenschaften, bei dem eine lokale Druckausübung auf das Funktionselement vermieden wird, sowie eine Verbundscheibe umfassend ein solches Funktionselement, bereitzustellen. Die Verbundscheibe soll ein Funktionselement möglichst homogener Dicke umfassen, das eine gute optische Qualität ohne sichtbare Inhomogenitäten aufweist.

Die Aufgabe der vorliegenden Erfindung wird erfindungsgemäß durch ein Verfahren zur Herstellung einer Verbundscheibe mit Funktionselement, eine nach einem solchen Verfahren hergestellte Verbundscheibe und deren Verwendung nach den unabhängigen Ansprüchen 1, 14 und 15 gelöst. Bevorzugte Ausführungen der Erfindung gehen aus den Unteransprüchen hervor.

Das Verfahren zur Herstellung einer Verbundscheibe mit Funktionselement umfasst als wesentliche Schritte die Ausbildung eines ersten Schichtstapels aus Scheiben und thermoplastischen Verbundfolien, der eine reversibel ablösbare Trennfolie enthält, ein Entfernen der Trennfolie und nachfolgend die Lamination der Verbundscheibe mit Funktionselement, wobei das Funktionselement an der Stelle der entnommenen Trennfolie eingelegt wird. Die das Funktionselement umgebenden thermoplastischen Verbundfolien werden auf diese Weise vor Aufnahme des Funktionselements vorgeformt. Die erforderlichen Verfahrensschritte werden im Folgenden detailliert beschrieben. In einem ersten Schritt des erfindungsgemäßen Verfahrens wird ein erster Schichtstapel aus in dieser Reihenfolge zumindest einer ersten Scheibe, einer ersten thermoplastischen Verbundfolie, mindestens einer Trennfolie, einer zweiten thermoplastischen Verbundfolie und einer zweiten Scheibe erstellt wird. Der so erzeugte erste Schichtstapel wird unter Erwärmung in einem ersten Laminationsschritt laminiert. Der erste Laminationsschritt dient noch nicht der abschließenden Herstellung einer Verbundscheibe, sondern lediglich der Ausbildung zweier homogener Oberflächen im Schichtstapel, die in der späteren Verbundscheibe das Funktionselement aufnehmen. Erst in einem zweiten Laminationsschritt wird das Funktionselement eingelegt und der Schichtstapel zu einer Verbundscheibe laminiert. Im ersten Laminationsschritt schmelzen die erste thermoplastische Verbundfolie und die zweite thermoplastische Verbundfolie zumindest teilweise auf, wodurch diese an der jeweils benachbarten Scheibe anhaften. Das Aufschmelzen der Verbundfolien bewirkt ein thermoplastisches Fließen des Materials der Verbundfolien, wodurch Unebenheiten und Fertigungstoleranzen der Verbundfolien und der Scheiben durch Migration der Schmelze ausgeglichen werden. Die erste thermoplastische Verbundfolie und die zweite thermoplastische Verbundfolie sind während der Lamination des ersten Schichtstapels durch die mindestens eine Trennfolie voneinander getrennt, so dass ein Verschmelzen der ersten thermoplastischen Verbundfolie mit der zweiten thermoplastischen Verbundfolie verhindert wird. Die Trennfolie ist ein im Laminationsverfahren nicht aufschmelzendendes folienförmiges Material, das rückstandslos von der ersten thermoplastischen Verbundfolie und der zweiten thermoplastischen Verbundfolie ablösbar ist und nur geringe Adhäsion zu diesen zeigt. Durch die Verwendung der mindestens einen Trennfolie ist in einem darauffolgenden Schritt die erste Scheibe mit erster thermoplastischer Verbundfolie auf einfache Weise von der zweiten Scheibe mit zweiter thermoplastischer Verbundfolie abnehmbar. Die mindestens eine Trennfolie verbleibt beim Abnehmen der ersten Scheibe mit zugehöriger Verbundfolie auf einer der einander im Schichtstapel zugewandten Oberflächen der Verbundfolien und kann anschließend von dieser Verbundfolie abgezogen werden. Aufgrund der geringen Adhäsion der Trennfolie zu den thermoplastischen Verbundfolien zeigen diese Komponenten nur eine geringe Haftung zueinander, die ein rückstandsloses Ablösen möglich macht. Auf diese Weise wird die Trennfolie aus dem Schichtstapel entfernt. Es verbleiben die erste Scheibe mit darauf auflaminierter erster thermoplastischer Verbundfolie und die zweite Scheibe mit darauf auflaminierter zweiter thermoplastischer Verbundfolie. In der darauffolgenden Schrittabfolge wird die eigentliche Verbundscheibe mit darin laminiertem Funktionselement gefertigt. Es wird zunächst ein Funktionselement bereitgestellt. Dieses Funktionselement wird auf die erste thermoplastische Verbundfolie der ersten Scheibe oder die zweite thermoplastische Verbundfolie der zweiten Scheibe aufgelegt und mit der zweiten thermoplastischen Verbundfolie mit zweiter Scheibe bzw. mit der ersten thermoplastischen Verbundfolie mit erster Scheibe abgedeckt. Die beiden thermoplastischen Verbundfolien umgeben dabei das Funktionselement, wobei ein zweiter Schichtstapel aus in dieser Reihenfolge zumindest erster Scheibe, erster thermoplastischer Verbundfolie, Funktionselement, zweiter thermoplastischer Verbundfolie und zweiter Scheibe gebildet wird. Der zweite Schichtstapel wird abschließend zu einer Verbundfolie laminiert.

In der mittels des erfindungsgemäßen Verfahrens hergestellten Verbundscheibe werden lokale Druckstellen des Funktionselementes vermieden, wodurch das Funktionselement eine homogene Dicke aufweist, die eine gute optische Qualität ohne sichtbare Inhomogenitäten bewirkt. Im ersten Laminationsschritt des Verfahrens, in dem die Komponenten der Verbundscheibe ohne Funktionselement und mit einer an Position des Funktionselementes platzierten Trennfolie laminiert werden, beginnen die thermoplastischen Verbundfolien bereits zu fließen und bilden so eine gleichmäßige Oberfläche aus. Die thermoplastischen Verbundfolien selbst weisen teilweise erhebliche Fertigungstoleranzen in ihrer Dicke auf. Dies trifft in geringerem Maße auch auf die verwendeten Scheiben zu, wobei Toleranzen insbesondere bei Verwendung von dreidimensional gebogenen Scheiben auftreten. Lokale Dickenabweichungen werden im ersten Laminationsschritt des erfindungsgemäßen Verfahrens ausgeglichen, so dass eine weitestgehende Planparallelität an der Stelle des Funktionselementes erreicht werden kann. Dabei fließt das Material der thermoplastischen Verbundfolie aus Scheibenbereichen mit zu hoher Schichtdicke der thermoplastischen Verbundfolie und/oder der angrenzenden Scheibe hin zu Scheibenbereichen, in denen die Dicke der Schichten zu niedrig ist. Die Fertigungstoleranzen der Scheiben und der Verbundfolien werden somit ausgeglichen und die nach Entfernen der Trennfolie zur Aufnahme des Funktionselementes dienenden Oberflächen der Verbundfolien weisen eine hohe Planparallelität ohne unerwünschte lokale Erhebungen oder Vertiefungen auf. Dadurch werden lokale Druckstellen des Funktionselementes vermieden. Ohne einen solchen ersten Laminationsschritt würde sich beispielsweise eine lokale Dickenerhöhung einer Scheibe auf das Funktionselement durchdrücken. Dadurch wird an dieser Stelle Material der aktiven Schicht des Funktionselementes weggedrückt und eine optisch sichtbare Inhomogenität resultiert. Zwar kann auch im zweiten Laminationsschritt das Material der thermoplastischen Verbundfolien fließen, jedoch erfolgt ein Ausgleich der Fertigungstoleranzen nicht schnell genug, so dass entsprechende Schäden am Flüssigkristallelement entstehen. Diese werden mittels des erfindungsgemäßen Verfahrens vermieden.

Als Trennfolie sind die verschiedensten folienförmigen Materialien verwendbar, sofern diese bei den in Laminierverfahren, insbesondere Autoklavverfahren, üblicherweise angewandten Temperaturen, nicht aufschmelzen und nur geringfügig an den benachbarten thermoplastischen Verbundfolien anhaften. Bevorzugt werden die Trennfolien aus chemisch inerten Materialien mit einer Schmelztemperatur von oberhalb 150 °C verwendet. Besonders bevorzugt umfassen die Trennfolien Polyhalogenolfine, insbesondere Polytetrafluorethylen. Polyhalogenolefine und insbesondere Polytetrafluorethylen sind vorteilhaft hinsichtlich ihrer guten chemischen und mechanischen Stabilität sowie der guten rückstandslosen Ablösbarkeit von den bevorzugten Materialien der thermoplastischen Verbundfolien.

In einer bevorzugten Ausführungsform des erfindungsgemäßen Verfahrens werden zumindest zwei Trennfolien, bevorzugt genau zwei Trennfolien verwendet. Daraus ergibt sich ein erster Schichtstapel aus in dieser Reihenfolge zumindest einer ersten Scheibe, einer ersten thermoplastischen Verbundfolie, einer ersten Trennfolie, einer zweiten Trennfolie, einer zweiten thermoplastischen Verbundfolie und einer zweiten Scheibe, der in einem ersten Laminationsschritt verbunden wird. Die Verwendung von zwei Trennfolien ist vorteilhaft hinsichtlich der vereinfachten Ablösung der Trennfolien. Wird nur eine einzelne Trennfolie im ersten Schichtstapel verwendet, so stehen die beiden gegenüberliegenden Folienoberflächen dieser Trennfolie jeweils in unmittelbarem Kontakt und in Wechselwirkung zu einer Verbundfolie. Auch bei Trennfolien, die eine geringe Adhäsion an den thermoplastischen Verbundfolien zeigen, kann diese bei Auftrennen des ersten Schichtstapels mit nur einer Trennfolie hinderlich sein, wodurch die Automatisierbarkeit des Prozesses abnimmt. Bei Verwendung zweier Trennfolien ist eine verbesserte Auftrennung des ersten Schichtstapels gegeben. Selbst wenn die Trennfolien eine geringe Adhäsion an der jeweils benachbarten thermoplastischen Verbundfolie zeigen, so ist diese in jedem Fall größer als die Adhäsion der beiden Trennfolien zueinander. Somit verbleibt allenfalls bei Abheben der ersten Scheibe mit erster thermoplastischer Verbundfolie die erste Trennfolie auf der ersten thermoplastischen Verbundfolie, während die zweite Trennfolie weiterhin auf der zweiten thermoplastischen Verbundfolie aufliegt. Die erste Trennfolie und die zweite Trennfolie können daraufhin mit einfachen Mitteln von den Verbundfolien abgezogen werden, wobei auch eine geringe Haftung der Trennfolie an den Verbundfolien keine wesentliche Störung des Herstellungsprozesses bewirkt.

In einer bevorzugten Ausführungsform des erfindungsgemäßen Verfahrens ragen die erste und/oder die zweite Trennfolie, bevorzugt beide Trennfolien, in mindestens einem Randabschnitt, bevorzugt im Wesentlichen umlaufend, über die umlaufende gemeinsame Kante der Scheiben hinaus. Dadurch können die Trennfolie oder die Trennfolien in den über die Scheibenkanten hinausragenden Bereichen maschinell oder händisch aufgenommen werden um die Trennung des ersten Schichtstapels einzuleiten. Somit wird die Trennung des ersten Schichtstapels vereinfacht.

Das Funktionselement mit elektrisch steuerbaren optischen Eigenschaften umfasst typischerweise eine aktive Schicht zwischen zwei Flächenelektroden. Die aktive Schicht weist die steuerbaren optischen Eigenschaften auf, welche über die an die Flächenelektroden angelegte Spannung gesteuert werden können. Die Flächenelektroden und die aktive Schicht sind typischerweise im Wesentlichen parallel zu den Oberflächen der ersten Scheibe und der zweiten Scheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter, wie sogenannte FPC-Anschlüsse. realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind.

In einer besonders bevorzugten Ausführungsform ist das Funktionselement ein Flüssigkristallelement und umfasst eine Guest-Host-Flüssigkristallzelle mit dichroitischem Farbstoff als aktive Schicht. Das erfindungsgemäße Verfahren ist besonders geeignet um derartige Funktionselemente einzubinden.

In weiteren möglichen Ausgestaltungen ist die aktive Schicht eine PDLC-, SPD-, eine elektrochrome oder eine elektrolumineszente Schicht.

In einer möglichen Ausführungsform ist das Funktionselement ein PDLC-Funktionselement (polymer dispersed liquid crystal). Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Ein solches Funktionselement ist beispielsweise aus DE 102008026339 A1 bekannt.

Ein SPD-Funktionselement (suspended particle device) enthält eine aktive Schicht umfassend suspendierte Partikel, wobei die Absorption von Licht durch die aktive Schicht mittels Anlegen einer Spannung an die Flächenelektroden veränderbar ist. Die Absorptionsänderung beruht auf der Ausrichtung der stäbchenartigen Partikel im elektrischen Feld bei angelegter elektrischer Spannung. SPD-Funktionselemente sind beispielsweise aus EP 0876608 B1 und WO 2011033313 A1 bekannt.

Bei einem elektrochromen Funktionselement ist die aktive Schicht des Funktionselements eine elektrochemisch aktive Schicht. Die Transmission von sichtbarem Licht ist vom Einlagerungsgrad von Ionen in die aktive Schicht abhängig, wobei die Ionen beispielsweise durch eine lonenspeicherschicht zwischen aktiver Schicht und einer Flächenelektrode bereitgestellt werden. Die Transmission kann durch die an die Flächenelektroden angelegte Spannung, welche eine Wanderung der Ionen hervorruft, beeinflusst werden. Geeignete funktionelle Schichten enthalten beispielsweise zumindest Wolframoxid oder Vanadiumoxid. Elektrochrome Funktionselemente sind beispielsweise aus WO 2012007334 A1, US 20120026573 A1, WO 2010147494 A1 und EP 1862849 A1 bekannt.

Bei elektrolumineszenten Funktionselementen enthält die aktive Schicht elektrolumineszente Materialen, insbesondere organische elektrolumineszente Materialen, deren Lumineszenz durch Anlegen einer Spannung angeregt wird. Elektrolumineszente Funktionselemente sind beispielsweise aus US 2004227462 A1 und WO 2010112789 A2 bekannt. Das elektrolumineszente Funktionselement kann als einfache Lichtquelle verwendet werden, oder als Display mit dem beliebige Darstellungen gezeigt werden können.

Die erste thermoplastische Verbundfolie und eine zweite thermoplastische Verbundfolie sind durch ihre thermoplastischen Eigenschaften geeignet eine adhäsive Verbindung zueinander und zu angrenzenden Scheiben und/oder angrenzenden Funktionselementen herzustellen. Beim Laminiervorgang beginnen die thermoplastischen Folien unter Hitzeeinwirkung zu fließen, wodurch diese an angrenzenden Elementen anhaften sowohl mit diesen als auch mit dem eingelegten Flüssigkristallelement verbunden werden. Bevorzugt enthalten die erste und die zweite thermoplastische Folie Polyvinylbutyral (PVB), Ethylenvinylacetat (EVA), Polyurethan (PU), Cycloolefinpolymere (COP) und/oder Copolymere oder Gemische davon, besonders bevorzugt PVB. Diese Materialien sind für die thermoplastische Zwischenschicht von Verbundscheiben üblich und stellen eine adhäsive Verbindung zu Glas her. Somit ist eine gute Verbindung gewährleistet. Die Bezeichnung "Verbundfolie" bezeichnet allgemein einen ein- oder mehrlagigen polymeren folienförmigen Film, der die Scheiben der Verbundscheibe flächig miteinander verbindet, wobei diese Verbundfunktion namensgebend für die Folie ist. Verbundscheiben umfassen in der Regel zwei Scheiben, wobei ein Verbund dieser Scheiben erst durch die zwischen den Scheiben eingelegte Verbundfolie und deren Haftung im Laminierprozess zustande kommt.

In einer bevorzugten Ausführungsform des erfindungsgemäßen Verfahrens enthalten die erste thermoplastische Verbundfolie und/oder die zweite thermoplastische Verbundfolie, bevorzugt beide thermoplastische Verbundfolien jeweils mindestens einen Weichmacher.

Weichmacher sind chemische Verbindungen, die Kunststoffe weicher, flexibler, geschmeidiger und/oder elastischer machen. Sie verschieben den thermoelastischen Bereich von Kunststoffen hin zu niedrigeren Temperaturen, so dass die Kunststoffe im Bereich der Einsatz-Temperatur die gewünschten elastischeren Eigenschaften aufweisen. Bevorzugte Weichmacher sind Carbonsäureester, insbesondere schwerflüchtige Carbonsäureester, Fette, Öle, Weichharze und Campher. Weitere Weichmacher sind bevorzugt aliphatische Diester des Tri- bzw. Tetraethylenglykols. Besonders bevorzugt werden als Weichmacher 3G7, 3G8 oder 4G7 eingesetzt, wobei die erste Ziffer die Anzahl der Ethlenglycoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel C₄H₉CH (CH₂CH₃) CO (OCH₂CH₂)₃O₂CCH (CH₂CH₃) C₄H₉.

Bevorzugt enthalten die erste thermoplastische Verbundfolie und/oder die zweite thermoplastische Verbundfolie, bevorzugt beide Folien, mindestens 25 Gew.-%, bevorzugt mindestens 30 Gew.-%, und insbesondere mindestens 40 Gew.-% eines Weichmachers. Der Weichmacher enthält oder besteht bevorzugt aus Triethylenglykol-bis-(2-ethylhexanoat). Als im erfindungsgemäßen Verfahren gut geeignet haben sich beispielsweise unter dem Namen *High-Flow-PVB* vertriebene Polyvinylbutyralfolien erwiesen, die einen gegenüber gebräuchlichen thermoplastischen Verbundfolien einen höheren Weichmacheranteil aufweisen. Der höhere Weichmacheranteil bewirkt eine verbesserte Fließfähigkeit des Materials bei Aufschmelzen im Laminationsprozess. Das mit steigendem Weichmacheranteil weicher werdende Material der Verbundfolien kann sich darüber hinaus auch im zweiten Laminationsschritt besser an die Oberflächen und Konturen der Scheiben und des Funktionselementes anpassen.

Die erste thermoplastische Verbundfolie und/oder die zweite thermoplastische Verbundfolie können jeweils von einer oder mehreren polymeren Folien gebildet werden. Die thermoplastischen Verbundfolien können jeweils auch mehrere polymere Schichten mit unterschiedlichen oder gleichen Eigenschaften umfassen. Die Verbundscheibe kann eine erste thermoplastische Verbundfolie und eine zweite thermoplastische Verbundfolie oder auch mehrere erste und/oder zweite thermoplastische Verbundfolien enthalten. Anstelle einer ersten und/oder zweiten thermoplastischen Verbundfolie kann sich demnach auch ein jeweils zweilagiger, dreilagiger oder mehrlagiger Folienstapel aus thermoplastischen Verbundfolien und/oder weiteren funktionellen Folien befinden, wobei die einzelnen Folien gleiche oder unterschiedliche Eigenschaften aufweisen. Eine thermoplastische Verbundfolie kann auch aus Abschnitten unterschiedlicher thermoplastischer Folien gebildet werden, deren Seitenkanten aneinandergrenzen.

In einer bevorzugten Ausführungsform können die erste thermoplastische Verbundfolie und/oder die zweite thermoplastische Verbundfolie jeweils mindestens zwei äußere polymere Schichten und mindestens eine zwischen diesen liegende innere polymere Schicht umfassen, wobei die innere polymere Schicht eine größere Plastizität oder Elastizität aufweist als die äußeren polymeren Schichten. Solche Schichtaufbauten werden auch als akustisch dämpfende thermoplastische Zwischenschicht von Verbundscheiben eingesetzt. Akustisch dämpfende thermoplastische Zwischenschichten besitzen einen weichen Kern, wobei die Steifigkeit des Schichtaufbaus vom Kern der inneren polymeren Schicht zu den von der inneren polymeren Schicht abgewandten Oberflächen der äußeren polymeren Schichten hin zunimmt. Die innere polymere Schicht weist eine Dicke von 0,05 mm bis 0,40 mm auf und die äußeren polymeren Schichten weisen eine Dicke von 0,20 mm bis 0,60 mm auf, wobei die Gesamtdicke der akustisch dämpfenden Zwischenschicht mindestens 0,50 mm, bevorzugt mindestens 0,70 mm beträgt.

Die innere polymere Schicht mit höherer Elastizität ist dabei vor allem für die akustische Dämpfung verantwortlich, während die äußeren polymeren Schichten niedrigerer Elastizität maßgeblich zur Stabilisierung der Scheibe beitragen. Die Verwendung solcher akustisch dämpfender thermoplastischer Zwischenschichten als erste und/oder zweite thermoplastische Verbundfolie ist vorteilhaft hinsichtlich einer möglichst homogenen Druckausübung auf das zu integrierende Funktionselement. Die weiche innere polymere Schicht der Verbundfolie übernimmt dabei aufgrund ihrer höheren Elastizität eine ausgleichende Funktion hinsichtlich lokaler Dickenerhöhungen an der der thermoplastischen Verbundfolie zugewandten Oberfläche der Scheibe. Dadurch werden lokale Druckstellen am Funktionselement vermieden und die optische Qualität der hergestellten Verglasung erhöht.

Die akustischen Eigenschaften einer akustisch dämpfenden thermoplastischen Zwischenschicht werden bevorzugt über eine sogenannte mechanische Impedanzmessung (MIM, *mechanical impedance measurement*) bestimmt. Dabei handelt es sich um ein standardisiertes Verfahren nachzulesen in ISO 16940, aus dem sich durch Messung der Eigenfrequenzen die Dämpfung berechnen lässt. Gemäß Standard wird die zu untersuchende akustisch dämpfende Zwischenschicht zwischen zwei Glasscheiben der Dicke 2,1 mm laminiert um eine entsprechende Vergleichbarkeit bei unterschiedlichen Glasdicken zu ermöglichen. Dem Fachmann wird somit die Auswahl geeigneter Zwischenschichten anhand eines wohlbekannten standardisierten Messverfahrens ermöglicht.

Die mechanische Impedanzmessung wird frühestens einen Monat nach Herstellung des Verbundglases durchgeführt. Ferner wird die Zwischenschicht selbst frühestens einen Monat nach ihrer Herstellung mit den beiden Glasscheiben von 2,1 mm Dicke zu einem Verbundglas laminiert. Dadurch wird sichergestellt, dass sich zum Zeitpunkt der Messung ein stabiler Zustand ausgebildet hat.

Es hat sich gezeigt, dass akustisch dämpfende thermoplastische Zwischenschichten mit bestimmten Dämpfungsfaktoren besonders geeignet zur Ausführung des erfindungsgemäßen Verfahren sind. In einer bevorzugten Ausführungsform der thermoplastischen Verbundfolien sind diese akustisch dämpfende thermoplastische Zwischenschichten, für die gilt, dass der Dämpfungsfaktor η₁ der ersten Mode und der Dämpfungsfaktor η₂ der zweiten Mode einer Verbundglasscheibe mit einer Oberfläche von 25 mm x 300 mm bestehend aus zwei Glasscheiben mit einer Dicke von jeweils 2,1 mm, zwischen denen die akustisch dämpfende Zwischenschicht laminiert ist, bei einer mechanischen Impedanzmessung (MIM) gemäß ISO 16940 bei einer Temperatur von 20°C η₁ ≥ 0,20 und η₂ ≥ 0,25, bevorzugt η₁ ≥ 0,25 und η₂ ≥ 0,30, besonders bevorzugt η₁ ≥ 0,25 und η₂ ≥ 0,35 beträgt.

Die äußeren polymeren Schichten und die innere polymere Schicht enthalten zumindest Polyvinylbutyral (PVB), Ethylenvinylacetat (EVA), Polyurethan (PU) oder Gemische oder Copolymere oder Derivate davon, die sich für Verbundgläser bewährt haben.

In einer bevorzugten Ausführungsform enthalten die äußeren polymeren Schichten und die innere polymere Schicht Polyvinylbutyral und Weichmacher. Die Auswahl des Weichmachers und der Acetalisierungsgrad des Polyvinylbutyrals ermöglichen es in einer dem Fachmann bekannten Weise die Elastizität der polymeren Schichten zu beeinflussen.

Die innere polymere Schicht weist bevorzugt eine Dicke von 0,07 mm bis 0,30 mm, besonders bevorzugt von 0,10 mm bis 0,20 mm, ganz besonders bevorzugt von etwa 0,15 mm auf, während die äußeren polymeren Schichten eine Dicke von 0,30 mm bis 0,40 mm, besonders bevorzugt von etwa 0,35 mm aufweisen. Dabei besitzen die äußeren polymeren Schichten in einer bevorzugten Ausgestaltung der Erfindung die gleiche Dicke. Alternativ können die äußeren polymeren Schichten sich in ihrer Dicke auch voneinander unterscheiden.

In einer möglichen Ausführungsform der Erfindung wird in Verfahrensschritt e) zwischen der ersten thermoplastischen Verbundfolie und der zweiten thermoplastischen Verbundfolie eine thermoplastische Rahmenfolie angeordnet wird, die das Funktionselement umrandet. Im Scheibenbereich jenseits der Seitenkanten des Funktionselementes wird demnach umlaufend die thermoplastische Rahmenfolie in den Schichtstapel eingelegt. Die Rahmenfolie ist rahmenartig ausgebildet mit einer Aussparung, in welche das Funktionselement eingelegt wird. Die Rahmenfolie kann in ihrer Beschaffenheit und Materialzusammensetzung der ersten und/oder zweiten thermoplastischen Verbundfolie entsprechen, wobei die Aussparung durch Ausschneiden eingebracht worden ist. Alternativ kann die thermoplastische Rahmenfolie auch aus mehreren Folienabschnitten um das Funktionselement zusammengesetzt werden. Die äußeren Seitenkanten der thermoplastischen Rahmenfolie werden bevorzugt deckungsgleich zu den Seitenkanten der ersten und der zweiten thermoplastischen Verbundfolie angeordnet. Die thermoplastische Rahmenfolie kann sich in ihrer Dicke von der Dicke der ersten und/oder zweiten Verbundfolie unterscheiden. Bevorzugt wird die Dicke der thermoplastischen Rahmenfolie so gewählt, dass sie in etwa die gleiche Dicke aufweist wie das Funktionselement. Dadurch wird der lokale Dickenunterschied der Verbundscheibe, der durch ein örtlich begrenztes Funktionselement eingebracht wird, kompensiert, so dass Glasbruch sowie lokale Druckstellen des Funktionselementes beim Laminieren vermieden werden können.

Die Rahmenfolie steht mit den benachbarten thermoplastischen Verbundfolien in Kontakt und verschmilzt während des Laminiervorgangs mit den thermoplastischen Verbundfolien. Die einzelnen Folienkomponenten bleiben dennoch insoweit erhalten, dass diese in auch der laminierten Verbundscheibe nachweisbar sind.

In einer weiteren bevorzugten Ausführungsform unterscheidet sich die Materialzusammensetzung der Rahmenfolie von der Zusammensetzung der ersten und zweiten thermoplastischen Verbundfolie. Insbesondere kann die Rahmenfolie PET umfassen, beispielsweise aus PET bestehen. Dies ist vorteilhaft um die Konsistenz der Rahmenfolie an die Konsistenz des Funktionselementes anzugleichen.

Die Dicke der thermoplastischen Verbundfolie bestimmt sich im Wesentlichen nach der Dicke des Funktionselementes, wobei besonders bevorzugt beide Dicken genau identisch sind. Dies ist in der Praxis aufgrund standardisierter Foliendicken der thermoplastischen Verbundfolien oft nicht möglich. In diesem Fall wird die Dicke der thermoplastischen Rahmenfolie größer als die Dicke des Funktionselementes gewählt, da andernfalls unerwünschter Druck auf das Funktionselement ausgeübt würde. Somit ist die Dicke der thermoplastischen Rahmenfolie bevorzugt größer oder gleich der Dicke des Funktionselementes. Dies ist insbesondere vorteilhaft wenn das Funktionselement als Guest-Host-Flüssigkristallzelle ausgeführt ist.

In einer weiteren bevorzugten Ausführungsform des erfindungsgemäßen Verfahrens wird keine thermoplastische Rahmenfolie in den Schichtstapel eingelegt. Dies ist beispielsweise möglich, wenn das Funktionselement eine vergleichsweise geringe Dicke aufweist und somit der lokale Dickenunterschied gering ausfällt. Ob auf eine Rahmenfolie verzichtet werden kann, hängt sowohl von der Bauart des Funktionselementes als auch von der Geometrie der herzustellenden Verbundscheibe ab. Für eine Verwendung ohne Rahmenfolie sind beispielsweise PDLC-Elemente oder SPD-Elemente geeignet. Andere Funktionselemente sind bedingt ebenfalls zur Lamination ohne Rahmenfolie geeignet. Insbesondere bei komplexen Geometrien oder starken Biegungen im Randbereich kann auch ein geringer lokaler Dickenunterschied einen Glasbruch begünstigen. Eine pauschale Vorhersage oberhalb welches Dickenunterschiedes eine thermoplastische Rahmenfolie eingesetzt werden sollte, lässt sich somit nicht treffen.

Als Funktionselement werden im erfindungsgemäßen Verfahren bevorzugt Elemente umfassend eine Guest-Host-Flüssigkristallzelle mit dichroitischem Farbstoff eingesetzt. Das Flüssigkristallelement umfasst zwei Trägerfolien, die in einem vorzugsweise konstanten Abstand zueinander angeordnet sind entlang ihrer gemeinsamen umlaufenden Kante über ein Dichtmittel abgedichtet sind. Die Guest-Host-Flüssigkristallzelle ist zwischen den Trägerfolien ausgebildet. Auf jeder der Trägerfolien ist jeweils eine elektrisch leitfähige Schicht auf der zu der Flüssigkristallzelle gewandten Oberfläche der Trägerfolie angeordnet. Die elektrisch leitfähigen Schichten dienen als Flächenelektroden über die eine elektrische Kontaktierung der Flüssigkristallzelle erfolgt. Durch Anlegen einer elektrischen Spannung an den Flächenelektroden wird eine Ausrichtung der Flüssigkristalle im elektrischen Feld bewirkt. Die Guest-Host-Flüssigkristallzelle umfasst Flüssigkristalle als zugrundeliegendes Medium (*host*), in dem ein dichroitischer Farbstoff eingelagert ist. Die eingelagerten dichroitischen Farbstoffe richten sich entlang der Vorzugsrichtung der Flüssigkristalle aus. Aufgrund ihres Dichroismus absorbieren die eingelagerten Farbstoffmoleküle einfallendes Licht in Abhängigkeit ihrer Orientierung. Licht mit einer Polarisationsrichtung parallel zur Absorptionsachse der Farbstoffmoleküle wird dabei stark absorbiert, während Licht mit einer Polarisationsrichtung senkrecht zur Absorptionsachse nur schwach absorbiert wird. Die Lichttransmission einer Guest-Host-Flüssigkristallzelle ist dabei abhängig von der Orientierung der Farbstoffmoleküle, die sich wiederum nach der Vorzugsrichtung der Flüssigkristalle bestimmt, die sich bei Anlegen einer Spannung im elektrischen Feld ausrichten. Dadurch ist in Abhängigkeit davon ob eine Spannung an den Flächenelektroden angelegt ist, das Flüssigkristallelement zwischen einem opaken und einem transparenten Zustand schaltbar. Weitere Faktoren für die Transmission des Flüssigkristallelementes sind dabei der Absorptionskoeffizient des eingelagerten Farbstoffs, die Dicke der Zelle und die Farbstoffkonzentration. Transparenter Zustand und opaker Zustand unterscheiden sich dadurch, dass die Transmission im opaken Zustand geringer ist als im transparenten Zustand, wobei auch im opaken Zustand eine gewisse Transmission vorliegen und erwünscht sein kann. Der Fachmann kann dies in Abhängigkeit der genannten Größen nach Wunsch einstellen. Die Betriebsspannung der Guest-Host-Flüssigkristallzelle ist abhängig von der Zelldicke und der Farbstoffkonzentration.

Guest-Host-Flüssigkristallzellen sowie die in diesen anwendbaren Flüssigkristalle und Farbstoffe sind kommerziell erhältlich und dem Fachmann bekannt. Es können beispielsweise nematische Flüssigkristalle und dichroitische Farbstoffe, bevorzugt Anthrachinonfarbstoffe und/oder Azofarbstoffe verwendet werden. Die im stromlosen Zustand vorliegende Ausrichtung der Flüssigkristalle wird durch eine Ausrichtungsschicht bestimmt, die auf den elektrisch leitfähigen Schichten unmittelbar benachbart zu den Flüssigkristallen vorliegt. Als Ausrichtungsschicht wird beispielsweise gebürstetes Polyimid verwendet.

Das Funktionselement kann außer der aktiven Schicht und den elektrisch leitfähigen Schichten weitere an sich bekannte Schichten aufweisen, beispielsweise Barriereschichten, Blockerschichten, Antireflexionsschichten, Schutzschichten und/oder Glättungsschichten.

Der Abstand der Trägerfolien zueinander definiert die Zellendicke, wobei diese bevorzugt etwa 5 µm bis etwa 20 µm und besonders bevorzugt etwa 8 µm bis etwa 12 µm beträgt. Zur Aufrechterhaltung des Zellspaltes können innerhalb des Volumens der aktiven Schicht Abstandhalter vorgesehen werden. Diese werden beispielsweise in Form von Stäbchen und/oder Kügelchen aus Glas oder Kunststoff zwischen den Trägerfolien eingelegt. Das Dichtmittel zur Abdichtung des Randbereichs der aktiven Schicht dabei im Spalt zwischen den Trägerfolien angrenzend zur umlaufenden Kante angeordnet. Als Dichtmittel wird beispielsweise ein Zweikomponenten-Epoxidharz eingesetzt.

Bevorzugt enthalten die erste Trägerfolie und/oder die zweite Trägerfolie zumindest ein im Autoklavprozess nicht vollständig aufschmelzendes Polymer, bevorzugt Polyethylenterephthalat (PET). Besonders bevorzugt bestehen die erste und die zweite Trägerfolie aus einer PET-Folie. Die Trägerfolien sind bevorzugt transparent. Die Dicke der Trägerfolien beträgt bevorzugt von 0,025 mm bis 0,400 mm, insbesondere von 0,050 mm bis 0,200 mm. Die erfindungsgemäßen elektrisch leitfähigen Schichten sind bevorzugt auf einer Oberfläche der Trägerfolie angeordnet, das heißt auf genau einer der beiden Seiten der Trägerfolie (also auf deren Vorderseite oder deren Rückseite). Die Trägerfolien sind dabei im Flüssigkristallelement so ausgerichtet, dass die elektrisch leitfähigen Schichten benachbart zur aktiven Flüssigkristallzelle angeordnet sind und als deren Flächenelektroden fungieren.

Die elektrisch leitfähigen Schichten der Trägerfolien dienen als Flächenelektroden des Funktionselements und sind bevorzugt transparent. Die Flächenelektroden enthalten bevorzugt zumindest ein Metall, eine Metalllegierung oder ein transparentes leitfähiges Oxid (transparent conductive oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und / oder Fluor-dotiertes oder Antimon-dotiertes Zinnoxid enthalten. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Die Flächenelektroden und die aktive Schicht sind in der herzustellenden Verbundscheibe typischerweise im Wesentlichen parallel zu den Oberflächen der ersten Scheibe und der zweiten Scheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind.

Die erste und die zweite elektrisch leitfähige Schicht werden vor Verfahrensschritt a) durch an sich bekannte Verfahren auf den Trägerfolien abgeschieden. Beispielhaft ist dabei auf magnetfeldunterstützte Kathodenzerstäubung zu verweisen. Das ist besonders vorteilhaft im Hinblick auf eine einfache, schnelle, kostengünstige und gleichmäßige Beschichtung des Substrats. Die elektrisch leitfähigen Schichten können aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die elektrische Kontaktierung der elektrisch leitfähigen Schichten über Sammelleiter oder andere geeignete elektrische Leiter erfolgt vor dem Laminieren der Verbundscheibe, bevorzugt bei Herstellung des Funktionselements vor dem Versiegeln des Randbereichs mit einem Dichtmittel.

Eventuell vorhandene Drucke, beispielsweise opake Abdeckdrucke oder aufgedruckte Sammelleiter zur elektrischen Kontaktierung des Funktionselements werden bevorzugt im Siebdruckverfahren aufgebracht.

Optional kann das Funktionselement in verschiedene unabhängig voneinander schaltbare Segmente unterteilt werden. Dazu werden die elektrisch leitfähigen Schichten, die als Flächenelektroden der Flüssigkristallzelle dienen, mittels Trennlinien in verschiedene Segmente gegliedert, die über jeweils im Bereich der Segmente angebrachte Sammelleiter einzeln ansteuerbar sind. Die Trennlinien isolieren benachbarte Segmente elektrisch voneinander. Im Bereich der Trennlinien sind die elektrisch leitfähigen Schichten der Trägerfolien entfernt, wodurch die elektrisch isolierende Wirkung der Trennlinien zustande kommt. Die Entschichtung einzelner Trennlinien in der elektrisch leitfähigen Schicht erfolgt vorzugsweise durch einen Laserstrahl. Die Trennlinien können an beliebiger Stelle des Verfahrens erzeugt werden. Die Trennlinien werden dabei bevorzugt mittels eines Lasers durch die der zu bearbeitenden elektrisch leitfähigen Schicht nächstliegende Trägerfolie hindurch erzeugt. Die Wellenlänge der Laserstrahlung des Lasers, mit dem die Trennlinien in die elektrisch leitfähige Schicht eingebracht werden, ist geeignet so zu wählen, dass die elektrisch leitfähige Schicht eine ausreichend hohe Absorption der Laserstrahlung aufweist und dass die Trägerfolie eine ausreichend geringe Absorption der Laserstrahlung aufweist. Dadurch wird die Trennlinie vorteilhaft selektiv in die elektrisch leitfähige Schicht eingebracht, ohne dass die Trägerfolie beschädigt wird. Dabei ist zu berücksichtigen, dass durch die Fokussierung der Laserstrahlung die Leistungsdichte in der elektrisch leitfähigen Schicht deutlich größer ist als in der Trägerschicht.

Es hat sich als vorteilhaft erwiesen die Wellenlänge der Strahlung des Lasers bei Erzeugung der Trennlinien im Bereich von 150 nm bis 1200 nm, bevorzugt im Bereich von 200 nm bis 500 nm, besonders bevorzugt im Bereich von 250 nm bis 400 nm zu wählen. Es hat sich gezeigt, dass dieser Bereich für die Wellenlängen bei der Verwendung üblicher elektrisch leitfähiger Schichten und üblicher Trägerfolien besonders geeignet ist. Der Wellenlängenbereich des Lasers ist dabei so gewählt, dass die Trennlinien selektiv in die elektrisch leitfähigen Schichten eingebracht werden. Die Breite der Entschichtung beträgt bevorzugt 10 µm bis 1000 µm, besonders bevorzugt 30 µm bis 200 µm und insbesondere 70 µm bis 140 µm. In diesem Bereich findet eine besonders saubere und rückstandsfreie Entschichtung durch den Laserstrahl statt.

Das Laminieren des ersten Schichtstapels in Verfahrensschritten b) sowie des zweiten Schichtstapels in Schritt f) erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Bevorzugt erfolgt eine Lamination in Schritt b) und/oder f) im Autoklavverfahren, besonders bevorzugt bei einem erhöhten Druck von etwa 10 bar bis 15 bar und Temperaturen von 130 °C bis 145 °C für eine Zeitspanne von etwa 2 Stunden. In einer anderen Ausführungsform werden in Schritt b) und/oder f) an sich bekannte Vakuumsack- oder Vakuumringverfahren eingesetzt, die beispielsweise bei etwa 200 mbar und 80 °C bis 110 °C arbeiten. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Verfahren zur Herstellung der im erfindungsgemäßen Verfahren verwendeten Funktionselementen, sind dem Fachmann bekannt und in der Literatur hinreichend beschrieben.

Handelt es sich bei dem Funktionselement um ein Guest-Host-Flüssigkristallelement, so sind die Trägerfolien im Allgemeinen unter Verwendung einer epoxidbasierten Kantenabdichtung an der umlaufenden Kante zu einem vorbestimmten Spalt zusammengehalten, wobei der Abstand der Trägerfolien die Dicke der Flüssigkristallzelle bestimmt und über umlaufend eingelegte Abstandhalter definiert. Das Flüssigkristall wird beispielsweise unter Verwendung eines Vakuumfüllprozesses oder eines Tropfenfüllprozesses in den Spalt eingebracht. Im Falle des Vakuumfüllprozesses ist die umlaufende Kantenabdichtung nicht fortlaufend und weist eine Öffnung auf, die als "Füllloch" bezeichnet wird. Die Trägerfolien mit Kantenabdichtung werden dann in einer Vakuumkammer angeordnet, wobei die zwischen den Trägerfolien befindliche Luft entfernt wird. In diesen evakuierten Spalt zwischen den Trägerfolien wird Flüssigkristallmaterial in das Füllloch eingeleitet, das aufgrund der Kapillarkräfte in den Spalt eingesogen wird. Dies kann durch dadurch beschleunigt werden, dass die Anordnung nach der Flüssigkristalleinleitung in das Füllloch auf atmosphärischen Druck gebracht wird. Das Füllloch wird abschließend versiegelt.

Die üblicherweise bei Guest-Host-Flüssigkristallelementen zwischen den Trägerfolien eingelegten Abstandhalter definieren den Abstand der Trägerfolien und somit den zwischen diesen befindlichen Spalt sowie die Dicke der Flüssigkristallzelle. Die Abstandhalter weisen vorzugsweise eine Dicke von 5 µm bis 50 µm, besonders bevorzugt 5 µm bis 20 µm auf, wodurch ein dementsprechender Spalt zwischen den Trägerfolien eingestellt wird. Der Spalt zwischen den Trägerfolien sollte dabei im Wesentlichen konstant sein, wobei Abweichungen von bis zu 20% der Dicke der Abstandhalter zu tolerieren sind.

Die Erfindung betrifft des Weiteren eine Verbundscheibe hergestellt in dem erfindungsgemäßen Verfahren. Die Verbundscheibe enthält mindestens eine erste Scheibe, eine erste thermoplastische Verbundfolie, ein Flüssigkristallelement umfassend eine Guest-Host-Flüssigkristallzelle mit dichroitischem Farbstoff, eine zweite thermoplastische Verbundfolie und eine zweite Scheibe. Die erste thermoplastische Verbundfolie und/oder die zweite thermoplastische Verbundfolie weisen dabei jeweils mindestens zwei äußere polymere Schichten und eine zwischen diesen liegende innere polymere Schicht auf, wobei die äußeren polymeren Schichten eine niedrigere Elastizität oder Plastizität als die innere polymere Schicht aufweisen. Dies ist vorteilhaft hinsichtlich einer möglichst homogenen Druckausübung auf das zu integrierende Flüssigkristallelement. Die weiche innere polymere Schicht der Verbundfolie übernimmt dabei aufgrund ihrer höheren Elastizität eine ausgleichende Funktion hinsichtlich lokaler Dickenerhöhungen an der der thermoplastischen Verbundfolie zugewandten Oberfläche der Scheibe. Dadurch werden lokale Druckstellen am Flüssigkristallelement vermieden und die optische Qualität der hergestellten Verglasung erhöht. Die höhere Elastizität oder Plastizität der inneren polymeren Schicht der jeweils ersten und/oder zweiten thermoplastischen Verbundfolie hat sich dabei insbesondere bei den für Druckstellen hoch empfindlichen Guest-Host-Flüssigkristallzellen als besonders vorteilhaft erwiesen um etwaige verbleibende Inhomogenitäten der Scheibenoberflächen zu kompensieren.

Die bei Beschreibung des erfindungsgemäßen Verfahrens erläuterten Merkmale der damit hergestellten Verbundscheibe gelten auch für erfindungsgemäße Verbundscheiben und werden an dieser Stelle nicht wiederholt.

Das Flüssigkristallelement ist über einen Bereich der ersten thermoplastischen Verbundfolie mit der ersten Scheibe und über einen Bereich der zweiten thermoplastischen Verbundfolie mit der zweiten Scheibe verbunden. Die erste und die zweite thermoplastische Verbundfolie sind bevorzugt flächig aufeinander angeordnet und miteinander laminiert, wobei das Flüssigkristallelement zwischen die beiden Schichten eingelegt ist. Die mit dem Flüssigkristallelement überlappenden Bereiche der thermoplastischen Verbundfolien bilden dann die Bereiche, welche das Flüssigkristallelement mit den Scheiben verbinden. In anderen Bereichen der Scheibe, wo die thermoplastischen Verbundfolien direkten Kontakt zueinander haben, können sie beim Laminieren verschmelzen.

Die erste und die zweite Scheibe der Verbundscheibe können gebogen sein, beispielsweise bei Einsatz als Fahrzeugverglasung. Die Scheiben können einzelnen oder gemeinsam gebogen werden. Bevorzugt werden die Scheiben gemeinsam (d.h. zeitgleich und durch dasselbe Werkzeug) kongruent gebogen, weil dadurch die Form der Scheiben für die später erfolgende Laminierung optimal aufeinander abgestimmt ist.

Soll die Verbundscheibe als gebogene Fahrzeugverglasung fungieren, so wird zumindest die als Außenscheibe verwendete Scheibe vor der Lamination einem Biegeprozess unterzogen. In einer bevorzugten Ausführung wird die als Innenscheibe eingesetzte Scheibe ebenfalls einem Biegeprozess unterzogen. Dies ist insbesondere bei starken Biegungen in mehrere Richtungen des Raums (sogenannte dreidimensionale Biegungen) vorteilhaft.

Alternativ wird die als Innenscheibe verwendete Scheibe nicht vorgebogen. Dies ist besonders bei Scheiben mit sehr geringen Dicken möglich, da diese eine folienartige Flexibilität aufweisen und so an die vorgebogene Außenscheibe angepasst werden können, ohne selbst vorgebogen werden zu müssen.

Die erste Scheibe und/oder die zweite Scheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polycarbonat, Polymethylmethacrylat und/oder Gemische davon. Die erste Scheibe und/oder die zweite Scheibe sind in einer möglichen Ausführungsform transparent, insbesondere für die Verwendung der Scheibe als Windschutzscheibe, Rückscheibe oder hintere Seitenscheibe eines Fahrzeugs oder anderen Verwendungen bei denen eine hohe Lichttransmission erwünscht ist. Für Scheiben, die nicht im verkehrsrelevanten Sichtfeld des Fahrers liegen, beispielsweise für Dachscheiben, kann die Transmission aber auch viel geringer sein, beispielsweise größer als 5 %. An den außenseitigen Oberflächen der ersten und der zweiten Scheibe können prinzipiell beliebige weitere Scheiben angeordnet sein und mit diesen über Lamination unter Zwischenlage thermoplastischer Folien oder auch über Abstandshalter im Falle einer Isolierverglasung verbunden sein.

In einer möglichen Ausführungsform ist die erfindungsgemäße Verbundscheibe eine Windschutzscheibe, wobei das Funktionselement als elektrisch schaltbare Sonnenblende verwendet wird.

In einer bevorzugten Ausführungsform ist die erfindungsgemäße Verbundscheibe eine Dachscheibe oder Seitenscheibe.

Die Dicke der ersten Scheibe und/oder der zweiten Scheibe liegt zwischen 0,3 mm und 10 mm, wobei die Scheibendicke stark abhängig ist von der Anwendung der Scheibe.

Besonders im Automobilbereich ist in den letzten Jahren ein Trend in Richtung immer geringerer Glasdicken zu verzeichnen, wodurch Einsparungen hinsichtlich des Fahrzeuggewichts möglich werden. Die Scheibendicken einer Automobilverglasung, insbesondere einer Windschutzscheibe, liegen für die Innenscheibe in der Regel im Bereich von 0,3 mm bis 2,5 mm und für die Außenscheibe im Bereich von 0,8 mm bis 2,5 mm. Eine asymmetrische Dickenkombination, bei der die Dicke der Außenscheibe größer ist als die Dicke der Innenscheibe, ist besonders bei einer geringen Gesamtdicke vorteilhaft im Hinblick auf eine verbesserte Stabilität der Verbundscheibe.

Ist die Verbundscheibe eine Windschutzscheibe, so liegt die Dicke der Außenscheibe bevorzugt zwischen 0,8 mm und 2,1 mm und die Dicke der Innenscheibe liegt bevorzugt zwischen 0,5 mm und 1,8 mm.

Ist die Verbundscheibe eine Dachscheibe eines Kraftfahrzeugs, so liegt die Dicke der Außenscheibe bevorzugt zwischen 1,1 mm und 2,1 mm und die Dicke der Innenscheibe bevorzugt zwischen 0,5 mm und 1,6 mm.

Das Verbundglas ist in seiner Ausführungsform als Fahrzeugverglasung bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Das Verbundglas kann aber auch plan sein, beispielsweise wenn es als Scheibe für Busse, Züge, Traktoren oder als Gebäudeverglasung vorgesehen ist.

Die erste Scheibe und/oder die zweite Scheibe können thermisch oder chemisch vorgespannt, teilvorgespannt oder nicht vorgespannt sein.

Das Verbundglas kann auch mit einer Zusatzfunktion versehen werden, indem die thermoplastische Zwischenschicht funktionelle Einlagerungen aufweist, beispielsweise Einlagerungen mit IR-absorbierenden, UV-absorbierenden oder farbgebenden Eigenschaften. Die Einlagerungen sind beispielsweise organische oder anorganische Ionen, Verbindungen, Aggregate, Moleküle, Kristalle, Pigmente oder Farbstoffe. Insbesondere thermoplastische Zwischenschichten mit UV-absorbierenden Eigenschaften zwischen der als Außenscheibe verwendeten Scheibe und dem Funktionselement sind vorteilhaft hinsichtlich eines Schutzes des Funktionselementes vor UV-Strahlung.

Insbesondere bei Verwendung der erfindungsgemäßen Verbundscheibe in Fahrzeugen ist es vorteilhaft darüberhinausgehende Funktionen zu implementieren um die negativen Auswirkungen von Witterungseinflüssen wie starker Sonneneinstrahlung oder Eisbildung zu verringern.

Ein weiterer Aspekt der Erfindung umfasst die Verwendung der erfindungsgemäßen Verbundscheibe in Fortbewegungsmitteln für den Verkehr auf dem Lande, in der Luft oder zu Wasser, bevorzugt in Zügen, Schiffen und Kraftfahrzeugen beispielsweise als Windschutzscheibe, Heckscheibe, Seitenscheibe und / oder Dachscheibe, besonders bevorzugt als Kraftfahrzeugdachscheibe.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
- Figur 1: einen Querschnitt des Schichtstapels der Verbundscheibe während einer Ausführungsform des erfindungsgemäßen Verfahrens,
- Figur 2a: eine Draufsicht auf eine erfindungsgemäße Verbundscheibe 1 mit Funktionselement,

- Figur 2b: einen Querschnitt durch die Verbundscheibe 1 gemäß Figur 2a entlang der Schnittlinie AA`,
- Figur 2c: einen Ausschnitt Z der erfindungsgemäßen Verbundscheibe 1 gemäß Figuren 2a und 2b, gezeigt entlang der Schnittlinie AA`,
- Figur 2d: einen Ausschnitt Z der erfindungsgemäßen Verbundscheibe 1 gemäß Figuren 2a und 2b, gezeigt entlang der Schnittlinie AA`,
- Figur 3: eine Ausführungsform des erfindungsgemäßen Verfahrens.

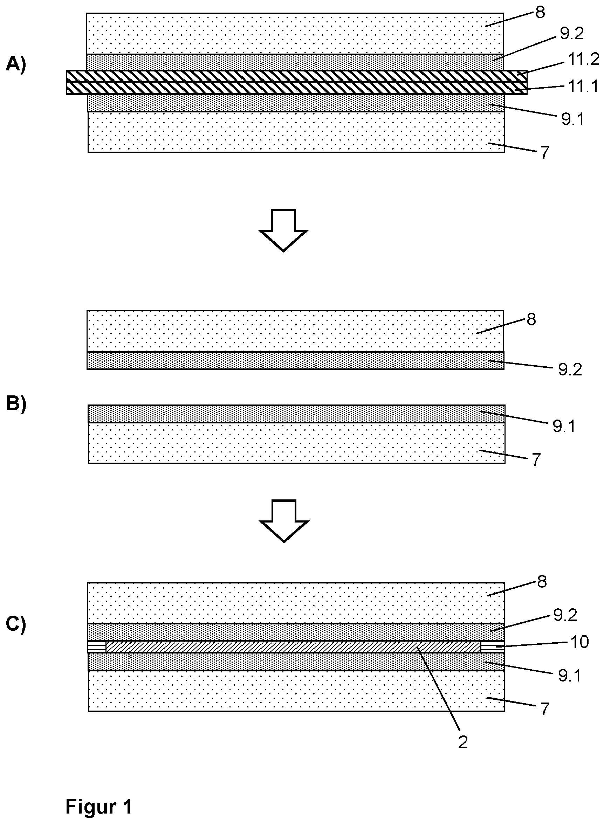

Figur 1 zeigt die während eines erfindungsgemäßen Verfahrens ausgebildeten Schichtstapel aus erster Scheibe 7, zweiter Scheibe 8 und den thermoplastischen Verbundfolien 9.1, 9.2, sowie Trennfolien 11.1, 11.2 oder Funktionselement 3. Die einzelnen Bearbeitungszustände des Schichtstapels werden dabei als Zustände A bis C dargestellt. Ein erster Schichtstapel aus in dieser Reihenfolge erster Scheibe 7, erster thermoplastischer Verbundfolie 9.1, erster Trennfolie 11.1, zweiter Trennfolie 11.2, zweiter thermoplastischen Verbundfolie 9.2 und einer zweiten Scheibe 8 wird als Zustand A) in Figur 1 dargestellt. Eine Trennfolie 11 ist dabei ausreichend, wobei der Einsatz zweier Trennfolien die Entnahme der Trennfolien 11 erleichtert. Die thermoplastischen Verbundfolien 11.1 und 11.2 weisen eine Dicke von jeweils 0,38 mm auf, während die Trennfolien 11.1 und 11.2 im Wesentlichen aus Polytetrafluorethylen bestehen und jeweils 50 µm dick sind. Die Scheiben 7, 8 bestehen aus Glas. Der in Zustand A) dargestellte erste Schichtstapel wird bei einer Temperatur von 145°C und einem Druck von 12 bar für einen Zeitraum von 2 Stunden laminiert. Dadurch werden die thermoplastischen Verbundfolien 9.1, 9.2 jeweils mit der benachbarten ersten Scheibe 7 und zweiten Scheibe 8 verbunden. Die Trennfolien 11.1 und 11.2 zeigen keinerlei Haftung untereinander, so dass der erste Schichtstapel zwischen der ersten Trennfolie 11.1 und der zweiten Trennfolie 11.2 mühelos aufgetrennt werden kann. Die Trennfolien 11 zeigen nur eine sehr geringe Haftung zu den benachbarten thermoplastischen Verbundfolien 9, so dass eine Auftrennung des Schichtstapels auch mit nur einer Trennfolie möglich ist. Im ersten Laminierschritt, dem der erste Schichtstapel unterzogen wird, werden die thermoplastischen Verbundfolien 9 aufgeschmolzen und beginnen zu fließen. Dabei verteilt sich das thermoplastische Material der Verbundfolien 9 gleichmäßig zwischen angrenzender Scheibe und angrenzender Trennfolie, so dass Unebenheiten der Scheibenoberfläche ausgeglichen werden und eine homogene Oberfläche der Verbundfolien 9.1, 9.2 zur Aufnahme des Funktionselementes 2 bereitsteht. Der Zustand B) gemäß Figur 1 zeigt die erste Scheibe 7 mit darauf laminierter erster thermoplastischer Verbundfolie 9.1 sowie die zweite Scheibe 8 mit darauf laminierter zweiter thermoplastischer Verbundfolie 9.2, wobei die erste Trennfolie 11.1 und die zweite Trennfolie 11.2 aus dem Schichtstapel entnommen sind. Zwischen der ersten thermoplastischen Verbundfolie 9.1 und der zweiten thermoplastischen Verbundfolie 9.2 wird daraufhin ein Funktionselement 2 eingelegt. Dadurch wird der zweite Schichtstapel, der als Zustand C) gezeigt ist, ausgebildet. Das Funktionselement 2 ist in seinen Abmaßen kleiner als die Scheiben 7,8 und die thermoplastischen Verbundfolien 9.1, 9.2. Die umlaufende Kante des Funktionselementes 2 ist dabei im Vergleich zur umlaufenden gemeinsamen Kante der Scheiben 7, 8 und der Verbundfolien 9 in Richtung der Flächenmitte des Schichtstapels nach innen versetzt. Im Randbereich zwischen umlaufender Kante des Funktionselementes 2 und umlaufender Kante der Scheiben 7, 8 ist eine thermoplastische Rahmenfolie 10 eingelegt, die das Funktionselement 2 rahmenartig umgibt. Die Verwendung einer Rahmenfolie 10 ist optional. Die Rahmenfolie besteht aus Polyethylenterephthalat (PET), wobei die Dicke der Rahmenfolie 10 der Dicke des Funktionselementes 2 entspricht. Das Funktionselement 2 ist eine Guest-Host-Flüssigkristallzelle, weist eine Dicke von 280 µm auf und umfasst als aktive Schicht 3 einen nematischen Flüssigkristall und einen dichroitischen Farbstoff. Der in Zustand C) gezeigte zweite Schichtstapel wird in einem zweiten Laminierschritt im Autoklavverfahren laminiert, wodurch sich eine erfindungsgemäße Verbundscheibe 1 ergibt. Die im zweiten Laminierschritt verwendeten Parameter können analog zu den im ersten Laminierschritt verwendeten Parametern gewählt werden. Grundsätzlich ist es jedoch ausreichend im zweiten Laminierschritt ein Aufschmelzen zu ermöglichen.

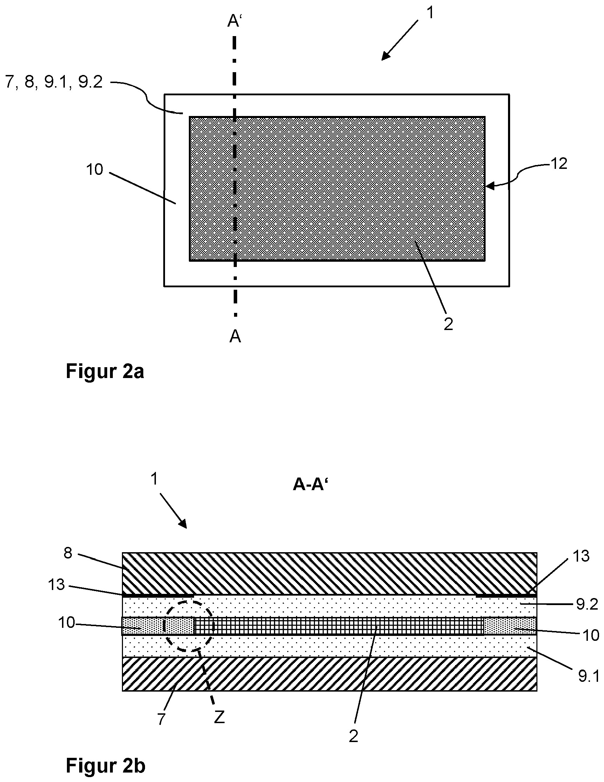

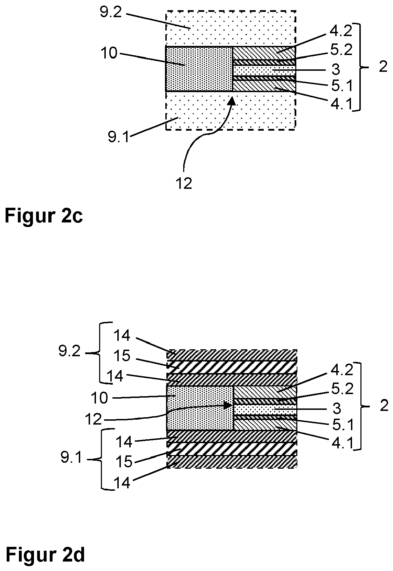

Figuren 2a, 2b, 2c und 2d zeigen Ansichten einer erfindungsgemäßen Verbundscheibe 1 mit elektrisch schaltbarem Flüssigkristallelement als Funktionselement 2. Figur 2a zeigt eine Draufsicht einer Verbundscheibe 1, die im erfindungsgemäßen Verfahren gemäß Figur 1 laminiert wurde. Insofern gelten die Ausführungen zu Figur 1, sofern hier nicht abweichend beschrieben. Das Funktionselement 2 ist, wie in Figur 1 beschrieben, mittels zweier thermoplastischer Verbundfolien 9.1, 9.2 zwischen der ersten Scheibe 7 und der zweiten Scheibe 8 einlaminiert. Die Ansicht der Figur 2b entspricht einem Querschnitt der Verbundscheibe analog zu dem in Figur 2a gezeigten Querschnitt entlang der Schnittlinie AA`. Auf die erste Scheibe 7 ist die erste thermoplastische Verbundfolie 9.1 aufgelegt, auf die thermoplastische Folie 9.1 folgt das Funktionselement 2. Das Funktionselement 2 wird von der zweiten thermoplastischen Verbundfolie 9.2 abgedeckt und der Schichtstapel durch die zweite Scheibe 8 abgeschlossen. Das Funktionselement 2 kann auch nur in Teilen der Verbundscheibe 1 eingelegt sein. Gemäß Figur 2a ist das Funktionselement 2 nur im Sichtbereich der Verbundscheibe 1 angebracht, wobei ein umlaufender Randbereich verbleibt, der frei von Funktionselement 2 ist. Die umlaufende Kante 12 des Funktionselements 2 ist somit im Vergleich zur umlaufenden Kante der Verbundscheibe 1, die von den Scheiben 7, 8 gebildet wird, in Richtung der Flächenmitte der Verbundscheibe 1 zurückversetzt. Im Randbereich zwischen umlaufender Kante 12 des Flüssigkristallelements 2 und Kante der Scheiben 7, 8 ist eine thermoplastische Rahmenfolie 10 eingelegt, die den Dickenunterschied zwischen Randbereich ohne Flüssigkristallelement 2 und Bereich mit Funktionselement 2 ausgleicht. Selbstverständlich können optional darüberhinausgehende Elemente, wie beispielsweise weitere elektrisch schaltbare Funktionsfolien oder andere Funktionselemente vorhanden sein. Der vereinfachten Darstellung halber ist eine dreidimensionale Biegung der Verbundscheibe in den Figuren 2a, 2b, 2c und 2d nicht dargestellt. Insbesondere bei Verwendung der Verbundscheibe 1 als Fahrzeugverglasung ist diese jedoch bevorzugt vorhanden. Die Vorteile des erfindungsgemäßen Verfahrens hinsichtlich der optischen Qualität der Verbundscheibe 1 zeigen sich insbesondere bei gebogenen Verbundscheiben. Insbesondere gebogene Scheiben 7, 8 weisen Inhomogenitäten bezüglich ihrer Dicke auf, die lokale Druckstellen am Funktionselement 2 bewirken. Diese können durch den erfindungsgemäßen ersten Laminationsschritt, in dem die thermoplastischen Verbundfolien 9 ohne Funktionselement 2 mit Trennfolien 11 vorlaminiert werden, vermieden werden. Im Randbereich der Verbundscheibe 1, in dem die thermoplastische Rahmenfolie 10 eingelegt ist, können die Scheiben 7, 8 optional mit einem opaken Abdeckdruck 13 versehen sein (siehe Figur 2b). Dieser kaschiert die Rahmenfolie 10 sowie die Kante 12 des Funktionselements 2, so dass diese für den Betrachter nicht sichtbar sind. Derartige Kaschierungen mittels Schwarzdruck sind dem Fachmann geläufig. Die elektrische Kontaktierung sowie eine Kantenversiegelung des Flüssigkristallelements als Funktionselement 2 sind in den Figuren nicht gezeigt, dem Fachmann allerdings aus dem Stand der Technik bekannt.

Figur 2c zeigt den vergrößerten Abschnitt Z der Figur 2b, in dem die Verbundscheibe 1 der Figur 2a im Querschnitt gezeigt ist. In Figur 2c ist dabei die detaillierte Schichtabfolge des Funktionselements 2 gezeigt. Das Funktionselement 2 umfasst eine erste Trägerfolie 4.1 und eine zweite Trägerfolie 4.2, wobei auf einer Oberfläche der ersten Trägerfolie 4.1 eine erste elektrisch leitfähige Schicht 5.1 aufgebracht ist, während eine Oberfläche der zweiten Trägerfolie 4.2 eine zweite elektrisch leitfähige Schicht 5.2 aufweist. Auf den elektrisch leitfähigen Schichten 5.1, 5.2 befinden sich Passivierungsschichten und Ausrichtungsschichten, die nach dem Stand der Technik bekannt sind (nicht gezeigt).

Zwischen den elektrisch leitfähigen Schichten 5.1, 5.2 befindet sich als aktive Schicht 3 eine Flüssigkristallzelle in Form einer Guest-Host-Zelle aus Flüssigkristallen und einem darin eingelagerten dichroitischen Farbstoff. Die Trägerfolien 4.1, 4.2 bestehen aus jeweils einer PET-Folie. Die elektrische leitfähigen Schichten 5.1, 5.2 sind Schichten umfassend Indium-Zinn-Oxid. Die thermoplastischen Verbundfolien 9.1, 9.2 entsprechen den in Figur 1 beschriebenen.

Figur 2d zeigt eine weitere Ausführungsform der Verbundscheibe 1 in Form des vergrößerten Abschnitts Z der Figur 2b, in dem eine weitere Ausführungsform der Verbundscheibe 1 gemäß Figur 2a im Querschnitt gezeigt ist. Der Ausbau entspricht im Wesentlichen dem in Figur 2c beschriebenen, wobei im Unterschied dazu die thermoplastischen Verbundfolien 9.1, 9.2 jeweils aus einer mehrschichtigen akustisch dämpfenden Verbundfolie bestehen. Diese mehrschichtige akustisch dämpfende Verbundfolie umfasst zwei äußere polymere Schichten 14, zwischen denen eine innere polymere Schicht 15 angeordnet ist. Die innere polymere Schicht 15 weist eine größere Plastizität oder Elastizität auf als die äußeren polymeren Schichten 14. Solche Schichtaufbauten haben sich als besonders vorteilhaft zur Verwendung im erfindungsgemäßen Verfahren erwiesen. Die resultierende Verbundscheibe 1 weist eine besonders gute optische Qualität auf, wobei lokale Druckstellen am Funktionselement 2 vermieden werden.

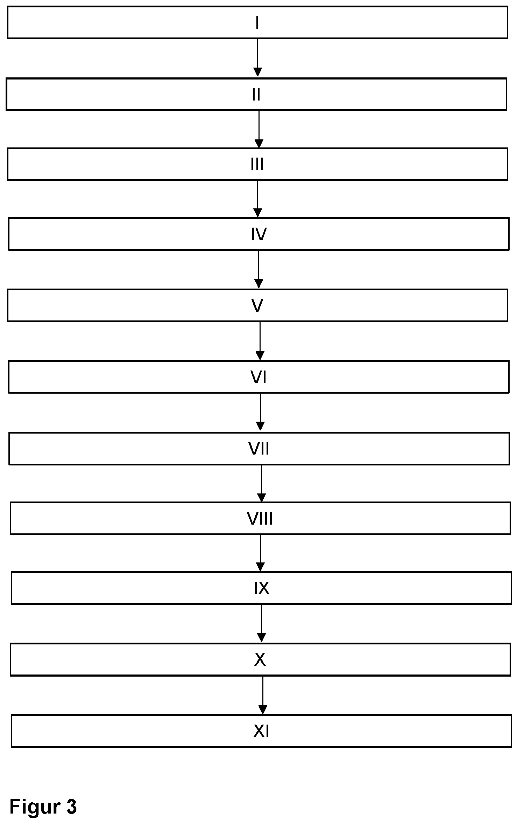

Figur 3 zeigt eine bevorzugte Ausführungsform des erfindungsgemäßen Verfahrens umfassend die Schritte:
I Auflegen einer ersten thermoplastische Verbundfolie 9.1 auf eine erste Scheibe 7
II Auflegen einer ersten Trennfolie 10.1 auf die erste thermoplastische Verbundfolie 9.1,
III Auflegen einer zweiten Trennfolie 10.2 auf die erste Trennfolie 10.1,
IV Auflegen einer zweiten thermoplastischen Verbundfolie 9.2 auf die zweite Trennfolie 10.2,
V Auflegen einer zweiten Scheibe 8 auf die zweite thermoplastische Verbundfolie 9.2,
VI Laminieren eines ersten Schichtstapels aus in dieser Reihenfolge
   - erster Scheibe 7,
   - erster thermoplastischer Verbundfolie 9.1,
   - erster Trennfolie 10.1,
   - zweiter Trennfolie 10.2,
   - zweiter thermoplastischer Verbundfolie 9.2,
   - zweiter Scheibe 8
      erstellt wird,
   unter Erwärmung im Autoklavverfahren laminiert wird, wobei die thermoplastischen Verbundfolien 9.1, 9.2 aufschmelzen und die erste thermoplastische Verbundfolie 9.1 an der ersten Scheibe 7 anhaftet und die zweite thermoplastische Verbundfolie 9.2 an der zweiten Scheibe 2 anhaftet,
VII Abnehmen der zweiten Scheibe 8 mit zweiter thermoplastischer Verbundfolie 9.2 und zweiter Trennfolie 10.2 von der ersten Scheibe 7 mit erster thermoplastischer Verbundfolie 9.1 und erster Trennfolie 10.1,
VIII Abziehen der ersten Trennfolie 10.1 und der zweiten Trennfolie 10.2 von der ersten thermoplastischen Verbundfolie 9.1 bzw. der zweiten thermoplastischen Verbundfolie 9.2 und Entfernen der Trennfolien 10.1, 10.2 aus dem Schichtstapel,
IX Auflegen eines Funktionselements 2 umfassend eine aktive Schicht 3 auf die erste thermoplastische Verbundfolie 9.1 mit daran angebundener erster Scheibe 7,
X Auflegen der zweiten thermoplastischen Verbundfolie 9.2 mit daran angebundener zweiter Scheibe 8 auf das Funktionselement 2,
XI Laminieren des zweiten Schichtstapel aus
   - erster Scheibe 7,
   - erster thermoplastischer Verbundfolie 9.1,
   - Funktionselement 2,
   - zweiter thermoplastischer Verbundfolie 9.2,
   - zweiter Scheibe 8
   unter Erwärmung im Autoklavverfahren zu einer erfindungsgemäßen Verbundscheibe 1.

### Bezugszeichenliste

- 1: Verbundscheibe
- 2: Funktionselement mit elektrisch schaltbaren optischen Eigenschaften
- 3: aktive Schicht
- 4: Trägerfolien des Funktionselements
- 4.1: erste Trägerfolie des Funktionselements
- 4.2: zweite Trägerfolie des Funktionselements
- 5: elektrisch leitfähige Schichten des Funktionselements
- 5.1: erste elektrisch leitfähige Schicht
- 5.2: zweite elektrisch leitfähige Schicht
- 7: erste Scheibe
- 8: zweite Scheibe
- 9: thermoplastische Verbundfolien
- 9.1: erste thermoplastische Verbundfolie
- 9.2: zweite thermoplastische Verbundfolie
- 10: Rahmenfolie
- 11: Trennfolien
- 11.1: erste Trennfolie
- 11.2: zweite Trennfolie
- 12: umlaufende Kante des Funktionselements 2
- 13: opaker Abdeckdruck
- 14: äußere polymere Schichten der thermoplastischen Verbundfolien 9
- 15: innere polymere Schichten der thermoplastischen Verbundfolien 9

- A-A': Schnittlinie
- Z: Ausschnitt

## Patentansprüche

1. Verfahren zur Herstellung einer Verbundscheibe (1) mit Funktionselement (2) mit elektrisch schaltbaren optischen Eigenschaften, wobei zumindest
a) ein erster Schichtstapel aus in dieser Reihenfolge zumindest
- einer ersten Scheibe (7),
- einer ersten thermoplastischen Verbundfolie (9.1),
- mindestens einer Trennfolie (10),
- einer zweiten thermoplastischen Verbundfolie (9.2),
- einer zweiten Scheibe (8)
erstellt wird,
wobei die erste thermoplastische Verbundfolie (9.1) und/oder die zweite thermoplastische Verbundfolie (9.2) jeweils von einer oder mehreren polymeren Folien gebildet werden können,
b) der erste Schichtstapel aus Schritt a) unter Erwärmung laminiert wird, wobei die erste thermoplastische Verbundfolie (9.1) an der ersten Scheibe (7) anhaftet und die zweite thermoplastische Verbundfolie (9.2) an der zweiten Scheibe (2) anhaftet,
c) die erste Scheibe (7) mit erster thermoplastischer Verbundfolie (9.1) von der zweiten Scheibe (8) mit zweiter thermoplastischer Verbundfolie (9.2) abgenommen wird und die mindestens eine Trennfolie (10) aus dem Schichtstapel entfernt wird,
d) ein Funktionselement (2) umfassend eine aktive Schicht (3) bereitgestellt wird,
e) das Funktionselement (2) auf die erste thermoplastische Verbundfolie (9.1) der ersten Scheibe (7) oder die zweite thermoplastische Verbundfolie (9.2) der zweiten Scheibe (8) aufgelegt und mit der zweiten thermoplastischen Verbundfolie (9.2) mit zweiter Scheibe (8) oder mit der ersten thermoplastischen Verbundfolie (9.1) mit erster Scheibe (7) abgedeckt wird, wodurch ein zweiter Schichtstapel aus zumindest
- erster Scheibe (7),
- erster thermoplastischer Verbundfolie (9.1),
- Funktionselement (2),
- zweiter thermoplastischer Verbundfolie (9.2),
- zweiter Scheibe (8)
gebildet wird und
f) der zweite Schichtstapel zu einer Verbundscheibe (1) laminiert wird,
wobei die mindestens eine Trennfolie (10) rückstandslos von der ersten thermoplastischen Verbundfolie (9.1) und der zweiten thermoplastischen Verbundfolie (9.2) ablösbar ist.

2. Verfahren nach Anspruch 1, wobei die mindestens eine Trennfolie (10) Polyhalogenolefine, bevorzugt Polytetrafluorethylen umfasst.

3. Verfahren nach Anspruch 1 oder 2, wobei in Schritt a) ein erster Schichtstapel aus in dieser Reihenfolge zumindest
- einer ersten Scheibe (7),
- einer ersten thermoplastischen Verbundfolie (9.1),
- einer ersten Trennfolie (10.1),
- einer zweiten Trennfolie (10.2),
- einer zweiten thermoplastischen Verbundfolie (9.2) und
- einer zweiten Scheibe (8)
erstellt wird.

4. Verfahren nach einem der Ansprüche 1 bis 3, wobei das Funktionselement (2) ein Flüssigkristallelement ist und eine Guest-Host-Flüssigkristallzelle mit dichroitischem Farbstoff als aktive Schicht (3) umfasst.

5. Verfahren nach einem der Ansprüche 1 bis 4, wobei die erste thermoplastische Verbundfolie (9.1) und/oder die zweite thermoplastische Verbundfolie (9.2) Polyvinylbutyral (PVB), Ethylenvinylacetat (EVA), Polyurethan (PU), Cycloolefinpolymere (COP) oder Copolymere oder Gemische davon, bevorzugt Polyvinylbutyral mit einem Weichmacheranteil von mindestens 30 Gew.-%, besonders bevorzugt mindestens 40 Gew.-% umfasst.

6. Verfahren nach Anspruch 5, wobei die erste thermoplastische Verbundfolie (9.1) und/oder die zweite thermoplastische Verbundfolie (9.2) jeweils mindestens zwei äußere polymere Schichten (14) und mindestens eine zwischen diesen liegende innere polymere Schicht (15) umfasst und die äußeren polymeren Schichten (14) eine niedrigere Elastizität oder Plastizität als die innere polymere Schicht (15) aufweisen.

7. Verfahren nach einem der Anspruch 6, wobei die innere polymere Schicht (15) eine Dicke von 0,07 mm bis 0,30 mm, bevorzugt von 0,10 mm bis 0,20 mm, aufweist.

8. Verfahren nach Anspruch 6 oder 7, wobei die äußeren polymeren Schichten (14) eine Dicke von 0,30 mm bis 0,40 mm aufweisen.

9. Verfahren nach einem der Ansprüche 1 bis 8, wobei in Verfahrensschritt e) zwischen der ersten thermoplastischen Verbundfolie (9.1) und der zweiten thermoplastischen Verbundfolie (9.2) eine Rahmenfolie (10) angeordnet wird, die das Funktionselement (2) entlang seiner umlaufendem Kante (12) umrandet.

10. Verfahren nach einem der Ansprüche 1 bis 9, wobei das Funktionselement (2) zumindest eine erste Trägerfolie (4.1) und eine zweite Trägerfolie (4.2) umfasst zwischen denen die aktive Schicht (3) angeordnet ist, wobei an den der aktiven Schicht (3) zugewandten Oberflächen der ersten Trägerfolie (4.1) und der zweiten Trägerfolie (4.2) elektrisch leitfähige Schichten (5.1, 5.2) angeordnet sind.

11. Verfahren nach Anspruch 10, wobei die elektrisch leitfähigen Schichten (5.1, 5.2) zumindest ein Metall, eine Metalllegierung oder ein transparentes leitfähiges Oxid, bevorzugt ein transparentes leitfähiges Oxid, enthalten und eine Dicke von 10 nm bis 2 µm aufweisen.

12. Verfahren nach Anspruch 10 oder 11, wobei die erste Trägerfolie (4.1) und/oder die zweite Trägerfolie (4.2) zumindest ein im Laminierverfahren nicht thermoplastisch aufschmelzendes Polymer enthalten, bevorzugt Polyethylenterephthalat.

13. Verfahren nach einem der Ansprüche 4 bis 12, wobei die Guest-Host-Flüssigkristallzelle (3) mit dichroitischem Farbstoff zumindest nematische Flüssigkristalle und einen dichroitischen Farbstoff, bevorzugt Anthrachinonfarbstoffe und/oder Azofarbstoffe umfasst.

14. Verbundscheibe (1) hergestellt in einem Verfahren nach einem der Ansprüche 1 bis 13 mindestens umfassend
- eine erste Scheibe (7),
- eine erste thermoplastische Verbundfolie (9.1),
- ein Flüssigkristallelement als Funktionselement (2) umfassend eine Guest-Host-Flüssigkristallzelle mit dichroitischem Farbstoff als aktive Schicht (3),
- eine zweite thermoplastische Verbundfolie (9.2),
- eine zweite Scheibe (8),
wobei die erste thermoplastische Verbundfolie (3.1) und/oder die zweite thermoplastische Verbundfolie (3.2) jeweils mindestens zwei äußere polymere Schichten (14) und eine zwischen diesen liegende innere polymere Schicht (15) umfasst und die äußeren polymeren Schichten (14) eine niedrigere Elastizität oder Plastizität als die innere polymere Schicht (15) aufweisen.

15. Verwendung einer Verbundscheibe nach Anspruch 14 in Kraftfahrzeugverglasungen, bevorzugt als Dachscheibe.

## Claims

1. Method for producing a laminated pane (1) comprising a functional element (2) having electrically switchable optical properties, wherein at least
a) a first layer stack is created from, in this order, at least
- a first pane (7),
- a first thermoplastic laminated film (9.1),
- at least one release film (10),
- a second thermoplastic laminated film (9.2),
- a second pane (8),
wherein the first thermoplastic laminated film (9.1) and/or the second thermoplastic laminated film (9.2) can each be formed by one or more polymeric films,
b) the first layer stack from step a) is laminated while being heated, wherein the first thermoplastic laminated film (9.1) adheres to the first pane (7) and the second thermoplastic laminated film (9.2) adheres to the second pane (2),
c) the first pane (7) having the first thermoplastic laminated film (9.1) is removed from the second pane (8) having the second thermoplastic laminated film (9.2) and the at least one release film (10) is removed from the layer stack,
d) a functional element (2) comprising an active layer (3) is provided,
e) the functional element (2) is placed onto the first thermoplastic laminated film (9.1) of the first pane (7) or the second thermoplastic laminated film (9.2) of the second pane (8) and is covered with the second thermoplastic laminated film (9.2) having the second pane (8) or with the first thermoplastic laminated film (9.1) having the first pane (7), whereby a second layer stack is formed from at least
- first pane (7),
- first thermoplastic laminated film (9.1),
- functional element (2),
- second thermoplastic laminated film (9.2),
- second pane (8)
and
f) the second layer stack is laminated to form a laminated pane (1),
wherein the at least one release film (10) can be detached from the first thermoplastic laminated film (9.1) and the second thermoplastic laminated film (9.2) without residue.

2. Method according to claim 1, wherein the at least one release film (10) comprises polyhalogen olefins, preferably polytetrafluoroethylene.

3. Method according to either claim 1 or claim 2, wherein, in step a), a first layer stack is created from, in this order, at least
- a first pane (7),
- a first thermoplastic laminated film (9.1),
- a first release film (10.1),
- a second release film (10.2),
- a second thermoplastic laminated film (9.2) and
- a second pane (8).

4. Method according to any of claims 1 to 3, wherein the functional element (2) is a liquid crystal element and comprises a Guest Host liquid crystal cell with dichroic dye as an active layer (3).

5. Method according to any of claims 1 to 4, wherein the first thermoplastic laminated film (9.1) and/or the second thermoplastic laminated film (9.2) comprises polyvinyl butyral (PVB), ethylene vinyl acetate (EVA), polyurethane (PU), cycloolefin polymers (COP) or copolymers, or mixtures thereof, preferably polyvinyl butyral having a plasticizer content of at least 30 wt.%, particularly preferably at least 40 wt.%.

6. Method according to claim 5, wherein the first thermoplastic laminated film (9.1) and/or the second thermoplastic laminated film (9.2) each comprise at least two outer polymeric layers (14) and at least one inner polymeric layer (15) lying therebetween, and the outer polymeric layers (14) have a lower elasticity or plasticity than the inner polymeric layer (15).

7. Method according to any of claims 6, wherein the inner polymeric layer (15) has a thickness of 0.07 mm to 0.30 mm, preferably 0.10 mm to 0.20 mm.

8. Method according to either claim 6 or claim 7, wherein the outer polymeric layers (14) have a thickness of 0.30 mm to 0.40 mm.

9. Method according to any of claims 1 to 8, wherein, in method step e), a frame film (10) is arranged between the first thermoplastic laminated film (9.1) and the second thermoplastic laminated film (9.2), which frame film borders the functional element (2) along its peripheral edge (12).

10. Method according to any of claims 1 to 9, wherein the functional element (2) comprises at least a first carrier film (4.1) and a second carrier film (4.2) between which the active layer (3) is arranged, wherein electrically conductive layers (5.1, 5.2) are arranged on the surfaces of the first carrier film (4.1) and the second carrier film (4.2) facing the active layer (3).

11. Method according to claim 10, wherein the electrically conductive layers (5.1, 5.2) contain at least a metal, a metal alloy or a transparent conductive oxide, preferably a transparent conductive oxide, and have a thickness of 10 nm to 2 µm.

12. Method according to either claim 10 or claim 11, wherein the first carrier film (4.1) and/or the second carrier film (4.2) contain at least one polymer which does not thermoplastically melt in the lamination process, preferably polyethylene terephthalate.

13. Method according to any of claims 4 to 12, wherein the Guest Host liquid crystal cell (3) with dichroic dye comprises at least nematic liquid crystals and a dichroic dye, preferably anthraquinone dyes and/or azo dyes.

14. Laminated pane (1) produced in a method according to any of claims 1 to 13, at least comprising
- a first pane (7),
- a first thermoplastic laminated film (9.1),
- a liquid crystal element as functional element (2) comprising a Guest Host liquid crystal cell with dichroic dye as active layer (3),
- a second thermoplastic laminated film (9.2),
- a second pane (8),
wherein the first thermoplastic laminated film (3.1) and/or the second thermoplastic laminated film (3.2) each comprises at least two outer polymeric layers (14) and an inner polymeric layer (15) lying therebetween, and the outer polymeric layers (14) have a lower elasticity or plasticity than the inner polymeric layer (15).

15. Use of a laminated pane according to claim 14 in motor vehicle glazings, preferably as a roof panel.

## Revendications

1. Procédé de fabrication d'un vitrage feuilleté (1) comportant un élément fonctionnel (2) comportant des propriétés optiques pouvant être commutées électriquement, dans lequel au moins
a) un premier empilement de couches est créé, dans cet ordre, à partir d'au moins
- une première vitre (7),
- un premier film composite thermoplastique (9.1),
- au moins un film de séparation (10),
- un second film composite thermoplastique (9.2),
- une seconde vitre (8),
dans lequel le premier film composite thermoplastique (9.1) et/ou le second film composite thermoplastique (9.2) peuvent être respectivement formés par un ou plusieurs films polymères,
b) le premier empilement de couches de l'étape a) est stratifié par chauffage, dans lequel le premier film composite thermoplastique (9.1) adhère à la première vitre (7) et le second film composite thermoplastique (9.2) adhère à la seconde vitre (2),
c) la première vitre (7) comportant le premier film composite thermoplastique (9.1) est retirée de la seconde vitre (8) comportant le second film composite thermoplastique (9.2) et l'au moins un film de séparation (10) est extrait de l'empilement de couches,
d) un élément fonctionnel (2) comprenant une couche active (3) est fourni,
e) l'élément fonctionnel (2) est appliqué sur le premier film composite thermoplastique (9.1) de la première vitre (7) ou sur le second film composite thermoplastique (9.2) de la seconde vitre (8) et est recouvert du second film composite thermoplastique (9.2) avec la seconde vitre (8) ou du premier film composite thermoplastique (9.1) avec la première vitre (7), moyennant quoi un second empilement de couches est formé à partir d'au moins
- la première vitre (7),
- le premier film composite thermoplastique (9.1),
- l'élément fonctionnel (2),
- le second film composite thermoplastique (9.2),
- la seconde vitre (8)
et
f) le second empilement de couches est stratifié pour former un vitrage feuilleté (1),
dans lequel l'au moins un film de séparation (10) peut être détaché sans résidus du premier film composite thermoplastique (9.1) et du second film composite thermoplastique (9.2).

2. Procédé selon la revendication 1, dans lequel l'au moins un film de séparation (10) comprend des oléfines polyhalogénées, de préférence du polytétrafluoroéthylène.

3. Procédé selon la revendication 1 ou 2, dans lequel, à l'étape a), un premier empilement de couches est créé, dans cet ordre, à partir d'au moins
- une première vitre (7),
- un premier film composite thermoplastique (9.1),
- un premier film de séparation (10.1),
- un second film de séparation (10.2),
- un second film composite thermoplastique (9.2) et
- une seconde vitre (8).

4. Procédé selon l'une des revendications 1 à 3, dans lequel l'élément fonctionnel (2) est un élément à cristaux liquides et comprend une cellule à cristaux liquides de type guest-host comportant un colorant dichroïque en tant que couche active (3).

5. Procédé selon l'une des revendications 1 à 4, dans lequel le premier film composite thermoplastique (9.1) et/ou le second film composite thermoplastique (9.2) comprennent du polyvinylbutyral (PVB), de l'éthylène-acétate de vinyle (EVA), du polyuréthane (PU), des polymères de cyclooléfine (COP) ou des copolymères ou des mélanges de ceux-ci, de préférence du polyvinylbutyral comportant une teneur en plastifiant d'au moins 30 % en poids, de manière particulièrement préférée d'au moins 40 % en poids.

6. Procédé selon la revendication 5, dans lequel le premier film composite thermoplastique (9.1) et/ou le second film composite thermoplastique (9.2) comprennent respectivement au moins deux couches polymères externes (14) et au moins une couche polymère interne (15) située entre celles-ci, et les couches polymères externes (14) présentent une élasticité ou une plasticité inférieure à celle de la couche polymère interne (15).

7. Procédé selon l'une de la revendication 6, dans lequel la couche polymère interne (15) présente une épaisseur allant de 0,07 mm à 0,30 mm, de préférence de 0,10 mm à 0,20 mm.

8. Procédé selon la revendication 6 ou 7, dans lequel les couches polymères externes (14) présentent une épaisseur allant de 0,30 mm à 0,40 mm.

9. Procédé selon l'une des revendications 1 à 8, dans lequel, à l'étape de procédé e), un film cadre (10) bordant l'élément fonctionnel (2) le long de son bord périphérique (12) est disposé entre le premier film composite thermoplastique (9.1) et le second film composite thermoplastique (9.2).

10. Procédé selon l'une des revendications 1 à 9, dans lequel l'élément fonctionnel (2) comprend au moins un premier film de support (4.1) et un second film de support (4.2) entre lesquels est disposée la couche active (3), dans lequel des couches électriquement conductrices (5.1, 5.2) sont disposées sur les surfaces du premier film de support (4.1) et du second film de support (4.2) tournées vers la couche active (3).

11. Procédé selon la revendication 10, dans lequel les couches électriquement conductrices (5.1, 5.2) contiennent au moins un métal, un alliage métallique ou un oxyde conducteur transparent, de préférence un oxyde conducteur transparent, et présentent une épaisseur allant de 10 nm à 2 µm.

12. Procédé selon la revendication 10 ou 11, dans lequel le premier film de support (4.1) et/ou le second film de support (4.2) contiennent au moins un polymère ne fondant pas de manière thermoplastique dans le procédé de stratification, de préférence du polyéthylène téréphtalate.

13. Procédé selon l'une des revendications 4 à 12, dans lequel la cellule à cristaux liquides de type guest-host (3) comportant un colorant dichroïque comprend au moins des cristaux liquides nématiques et un colorant dichroïque, de préférence des colorants anthraquinoniques et/ou des colorants azoïques.

14. Vitrage feuilleté (1) fabriqué lors d'un procédé selon l'une des revendications 1 à 13, comprenant au moins
- une première vitre (7),
- un premier film composite thermoplastique (9.1),
- un élément à cristaux liquides en tant qu'élément fonctionnel (2), comprenant une cellule à cristaux liquides de type guest-host comportant un colorant dichroïque en tant que couche active (3),
- un second film composite thermoplastique (9.2),
- une seconde vitre (8),
dans lequel le premier film composite thermoplastique (3.1) et/ou le second film composite thermoplastique (3.2) comprennent respectivement au moins deux couches polymères extérieures (14) et une couche polymère intérieure (15) située entre celles-ci, et les couches polymères extérieures (14) présentent une élasticité ou une plasticité inférieure à celle de la couche polymère intérieure (15).

15. Utilisation d'un vitrage feuilleté selon la revendication 14 dans des vitrages de véhicules automobiles, de préférence en tant que vitre de toit.
